# EUROPEAN PATENT APPLICATION

(11) **EP 2 589 576 A1**
(43) Date of publication of application: **08.05.2013**
(21) Application number: 11800002.5
(22) Date of filing: 30.06.2011
(51) Int. Cl.: C03B 35/18, C03B 27/012, B65G 39/00

(54) **MOLTEN SILICA ROLL WITH HEATING SYSTEM FOR GLASS TEMPERING AND THERMAL TREATMENT OF MATERIALS**

(30) Priority: 01.07.2010 BR PI1002370
(71) Applicant: Oecksler, Airton Antonio, CEP 89110-000 Na Cidade De Gaspar, Santa Catarina (BR)
(72) Inventor: Oecksler, Airton Antonio, CEP 89110-000 Na Cidade De Gaspar, Santa Catarina (BR)
(74) Representative: Cutropia, Gianluigi
(86) International application number: PCT/BR2011/000212
(87) International publication number: WO 2012/000072

(57) **Abstract**

The present application relates to a molten silica roll, with a heating system incorporated internally into the roll, for use in horizontal furnaces for glass tempering or thermal treatment of other materials. The invention takes the form of a heating molten silica roll (6) shaped as a cylinder with a longitudinal circular tunnel (9) for accommodating the heating electrical resistance element (8), connected to the electrical terminals (2 and 2a) of the rotary mercury contacts (1 and 1 a).

## Description

This invention request refers to a model of molten or fused silica roll with a heating system incorporated into the roll for using in horizontal tempering glass furnaces or thermal treatment of other materials. The silica roll will have the function of glass transportation and oscillation inside the heating chamber and also the function of heating the material in contact with the roll that is heated by electrical resistance installed inside the roll.

In the current state of art the fused silica rolls are used exclusively for the transportation and oscillation of the glass inside of the heating chamber of the glass tempering furnace or treatment of materials due to its excellent thermal property.

The glass tempering process is composed of four basic steps: glass loading, heating, cooling and unloading.

In the current state of the art, the heating chamber is responsible for the glass heating by radiation and natural or forced convection process through electrical resistances installed on the top and bottom of the heating chamber, where the rolls are only used in the function of previous glass transportation and oscillation of short advancement and return during the heating.

In the current state of the art, we also highlight that several inventive novelties focused on the glass manufacturing and treatment are developed and patented exactly to ensure its inventive novelty. We can highlight the great variety of glasses produced nowadays, such as acid-etched glass, antireflective glass, wired glass, self-cleaning glass, low emission glass, beveled glass, bulletproof glass, bent glass, double glazed glass, extra clear glass, sandblasted glass, reflective glass, screen printed glass, tempered glass, among others which use and need new technologies to improve quality and increase productivity.

Seeking to innovate this market, the author developed this invention that consists in a roll of fused silica designed to perform the transportation and oscillation function of the glass inside the heating chamber, a detail already included in the state of the art, and also, to perform the technology required herein, which is the role of heating through electrical resistance inside the roll, whose main object is to heat the glass or the material to be treated.

The roll was designed so that the wall thickness of the hollow cylinder, manufactured of refractory material similar to a tube, has a maximum transfer rate of heat produced through the resistance housed inside.

At the ends of the rolls, terminals interconnected with the electrical resistance housed inside the roll are installed, and to perform the connection between the roll in rotating movement with the electric circuit of the machine power, mercury rotating metallic contacts were installed in the terminals of the ends of the rolls, and theses rotating contacts can be also manufactured in copper or silver collecting rings and coal or graphite brushes.

We can highlight that the heating through the fused silica roll required herein presents much more efficient and practical technological innovations when compared to the traditional system currently used, which currently performs the heating of the furnace through electrical resistances installed inside the heating chamber of the furnace, at the top and at the bottom.

For the positive aspects and advantages from the technology application required by the author herein, we can highlight the increased productivity by the rapid heating of the material through thermal conduction provided by direct contact between the heated roll and the glass or material to be treated, which results in greater productivity with reduced cycle of time in production.

Increase in heat transfer rate between the roll and the glass or the material to be treated with increased efficiency, resulting in energy savings.

Gains in the reduction of losses on thermal energy resulting from heat irradiation of the electrical resistances installed on the furnace walls, particularly because they are installed near the insulation in the inside of the furnace heating chamber.

Another improvement aspect to be highlighted is the no need of labor currently required for assembly and installation of electrical resistances at the bottom and at the top of the heating chamber in conventional models or, if necessary, to keep only the electrical resistances of the top.

Significant reduction in raw material such as insulation, profiles, structures, metal plates, supports for electrical resistances and other materials resulting from the reduction on the size of the heating chamber, or because they are not necessary in the proposed production process.

Gains in industrial physical space because of reduction in the size of the heating chamber resulting from the increased efficiency of thermal heat transfer rate, in the case of continuous production furnaces.

We can also highlight as benefits of the new technology required herein, the reduction in time to start the production process resulting from the rapid heating of the roll for the start of production. This time for the furnace heating to the ideal working temperature is lower when compared to the current technology used, which requires much time to heat and homogenize the temperature inside the chamber of the furnace.

Another advantage presented by the roll here claimed is in case of burning of the heating electrical resistance, when it can be replaced without the need of shutting down and stopping the machine for a long period and waiting for the natural cooling of the furnace heating chamber. This electrical resistance replacement can be done with the chamber heated and without the need of opening and disassembling the furnace, which does not currently occur in traditional furnaces, when it is necessary to shutdown the machine for a period of approximately 40 hours for the natural cooling of the chamber, and only after this period the chamber can be opened to have the electrical resistance replaced.

We also highlight as a technological improvement achieved, the significant increase in the electrical resistance lifespan, which is now housed inside the roll and isolated from the internal atmosphere of the heating chamber and free from the contact with this oxidizing or reducing atmosphere.

Significant decrease of problems of burnt or defect of electrical resistances, from the bottom of the furnace, caused by possible glass breakage inside the heating chamber where glass particles at temperatures above 500 degrees Celsius become electrically conductive and cause a short circuit between the electrical resistance when in contact with them, and therefore, causing them to burn.

The roll proposed and required herein was thoroughly tested and improved to have its practical functionality tested and proven, and also support and be adapted to possible changes in the model of electrical resistances to be used inside the roll.

Another variant that the roll may provide is related to the material used as heating element, which can be made of carbon, graphite, metal wires for electrical resistance or other heating elements. The electrical resistances can also be supported by quartz tube and have temperature sensors installed internally the roll to possible monitoring, and that also, it is not intended to limit the different ways or number of electrical resistances used inside the heating roll, which may vary according to the need in its commercialization.

The electrical heating resistance can be constructed of self-compensation temperature material in order to demand greater heat output in the area of the roll where the temperature is lower, and to demand less heat input where the temperature is higher.

The fused silica roll required herein may be made from other materials such as quartz, alumina, ceramics, porcelain and materials of future technologies, with the possibility of being used in other equipment and materials, not only to the process of heating and tempering of glass, ceramics, metals and polymers.

The annexed figures and the following detailed explanation are intended for accurate understanding, and they have numerical references.

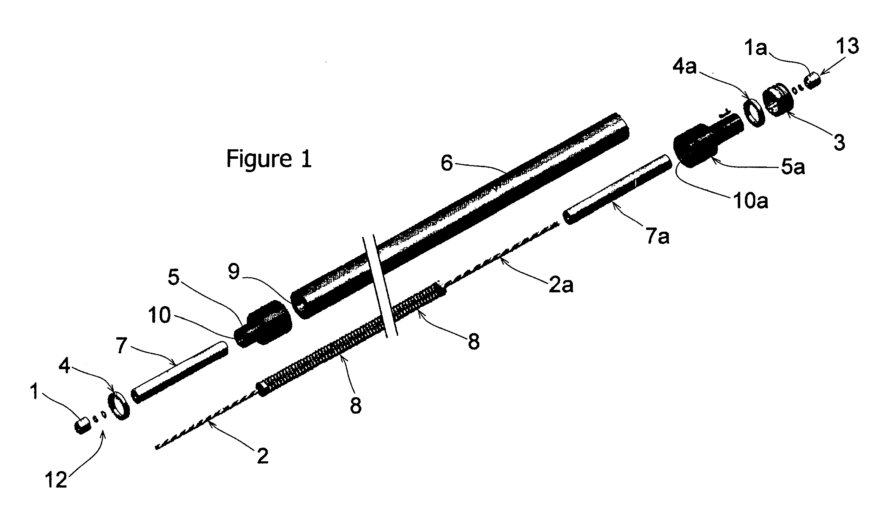

Figure 1 - Exploded perspective view of the fused silica roll with a heating system internally built for the heat treatment of glass and materials.

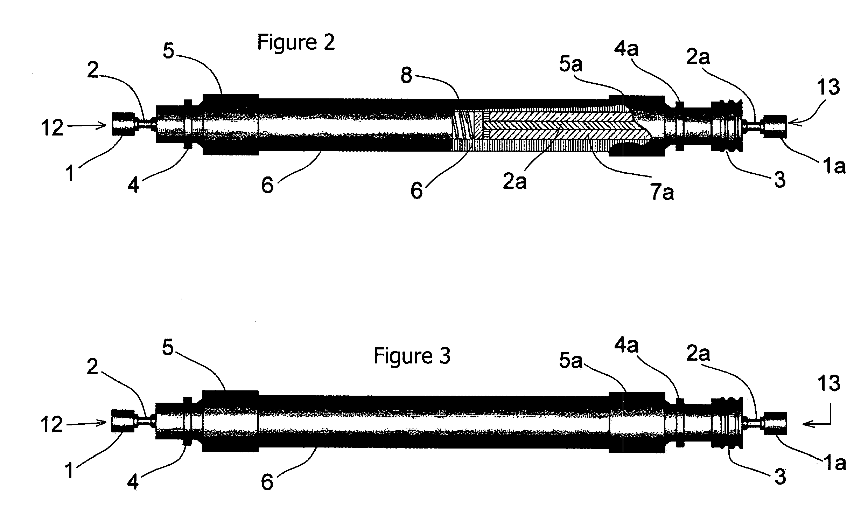

Figure 2 - Front view of fused silica roll with a partial cut for the inside detailing, where the opposing sides are substantially identical.
Figure 3 - Back view of the fused silica roll, with the opposite sides substantially identical.

According to the figures described above, the present requirement is comprised of a set of bearings (4 and 4a) housed over the shaft ends and nozzles (5 and 5a), characterized by being attached to the fused silica roll (6) of heating in a cylindrical shape, with a circular longitudinal tunnel (9) for accommodation of electrical resistance (8), in resistive massive or tubular bar-shaped or spiral connected at the ends to electrical terminals (2 and 2a) of stainless steel, insulated through ceramics bushing (7 and 7a) of insulation, which are fitted in the hole (10 and 10a) of the nozzles (5 and 5a), which receives the bearings externally (4 and 4a), with the right side (13) provided with a pulley (3) and rotary contacts of mercury (1 a), and the left side (12) provided with rotary contacts of mercury (1).

The right side (13) is provided with a pulley (3) responsible for transmitting the rotational movement of the rotation of the entire assembly supported by the bearings (4 and 4a) around its own axis, which also rotates the rotary contacts of mercury (1 and 1 a), making the electrical connection between the terminals (2 and 2a) and the electric circuit of the machine power.

The fused silica roll (6) is manufactured of fused silica or refractory material in a cylindrical shape with longitudinal circular tunnel (9).

The fused silica roll (6) has its heating from the inside to the outside through the heating of the electrical resistance (8) housed in the longitudinal circular tunnel (9), which associated to the wall thickness of the fused silica roll (6) produce a maximum rate of heat transfer.

The electrical terminals (2 and 2a) of electrical connection interconnect the electricity conduction between the electrical resistance (8) and the rotary contacts of mercury (1 and 1 a), which transfer the electricity to the external electrical resistance (8) regardless of being in rotational movement or static.

The isolation between the electrical terminals (2 and 2a) and the axes and nozzles (5 and 5a) is performed through ceramic bushings (7 and 7a) or other insulating material with refractory and insulating features.

The bearings (4 and 4a) housed over the shaft ends and nozzles (5 and 5a) assembled to the fused silica roll (6) on the left side (12) and on the right side (13) serve as a support for the support table of the furnace for the rotation of the set called fused silica roll (6).

The rotary contacts of mercury (1 and 1a) may be presented in the form of a copper collector ring and coal brush.

The electrical resistance (8) can be developed with specific features for temperature compensation to achieve a maximum thermal power generation in regions of low temperature and minimum thermal power generation in regions of high temperature.

The fused silica roll with the heating system built internally for thermal treatment of materials was designed to meet the requirements of functionality, mechanical resistance, robustness and durability that its use requires. It involves all the necessary security requirements, combining changing of known elements in shape and innovative arrangement in its construction and practical application.

## Claims

1. A molten silica roll with heating system for glass tempering and thermal treatment of materials, comprising a set of bearings (4 and 4a) housed on the shaft ends and nozzles (5 and 5a), characterized for being attached to the molten silica roll (6) of heating, built in the shape of a cylinder with a longitudinal circular tunnel (9) for the accommodation of the electrical resistance (8), in resistive massive bar-shaped or spiral connected at the ends to the electrical terminals (2 and 2a) of stainless steel, insulated by ceramic bushings (7 and 7a) of insulation, which are fitted in the hole (10 and 10a) of the nozzles (5 and 5a) that receives the bearing externally (4 and 4a), with the right side (13) provided with a pulley (3) and rotary contacts of mercury (1 a) and the left side (12) provided with rotary contacts of mercury (1).

2. Molten silica roll with heating system for glass tempering and thermal treatment of materials, according to claim 1, **characterized by** the right side (13) that is provided with a pulley (3), transmitting the rotational movement of the molten silica roll rotation (6) around its own axis.

3. Molten silica roll with heating system for glass tempering and thermal treatment of materials, according to claim 1, **characterized by** a molten silica roll (6), manufactured in molten silica or refractory material in the shape of a cylinder.

4. Molten silica roll with heating system for glass tempering and thermal treatment of materials, according to claim 1, **characterized by** molten silica roll (6) to carry out its heating from the inside to the outside through the heating of a electrical resistance (8) housed in the longitudinal circular tunnel (9).

5. Molten silica roll with heating system for glass tempering and thermal treatment of materials, according to claim 1, **characterized by** the electrical terminals (2 and 2a) of electrical connection to make the interconnection of the electricity conduction between the electrical resistance (8) and the rotary contacts of mercury (1 and 1a), regardless of being in rotational movement or static.

6. Molten silica roll with heating system for glass tempering and thermal treatment of materials, according to claim 1, **characterized by** the insulation of electrical terminals (2 and 2a) of the molten silica roll (6), performed through the ceramic bushings (7 and 7a).

7. Molten silica roll with heating system for glass tempering and thermal treatment of materials, according to claim 1 and 6, **characterized by** the ceramic bushings (7 and 7a) can be manufactured from other insulating material with refractory and insulating features.

8. Molten silica roll with heating system for glass tempering and thermal treatment of materials, according to claim 1, **characterized by** the bearings (4 and 4a) housed at the ends of the molten silica roll (6) on left side (12) and on the right side (13), to serve as a support for the rotation around the molten silica roll (6).

9. Molten silica roll with heating system for glass tempering and thermal treatment of materials", according to claim 1, **characterized by** the rotary contacts of mercury (1 and 1 a) may be presented in the form of a coal ring-brush.
